Europäisches Patentamt

European Patent Office

Office européen des brevets

(19)

(11) Publication number: **0 260 879 B1**

# EUROPEAN PATENT SPECIFICATION

(12)

(45) Date of publication of patent specification: **12.06.91**  (51) Int. Cl.⁵: **C03B 33/10**

(21) Application number: **87308014.7**

(22) Date of filing: **10.09.87**

(54) **Improvements in or relating to glass scoring apparatus.**

(30) Priority: **17.09.86 GB 8622400**

(43) Date of publication of application:
**23.03.88 Bulletin 88/12**

(45) Publication of the grant of the patent:
**12.06.91 Bulletin 91/24**

(84) Designated Contracting States:
**GB IT SE**

(56) References cited:
**EP-A- 0 126 874**
**FR-A- 2 333 757**
**GB-A- 2 002 343**
**US-A- 3 913 460**

(73) Proprietor: **PILKINGTON PLC**
**Prescot Road**
**St. Helens, Merseyside WA10 3TT(GB)**

(72) Inventor: **Walker, Roderick James**
**17 Mayfair Avenue**
**Great Crosby Liverpool L23 2TL(GB)**

(74) Representative: **Jenkins, Peter David et al**
**PAGE, WHITE & FARRER 54 Doughty Street**
**London WC1N 2LS(GB)**

## Description

This invention concerns improvements in or relating to glass scoring apparatus (sometimes referred to as 'cutters') for scoring flat glass in the form of a continuous ribbon or of individual plates.

A known form of glass scoring apparatus is described in United Kingdom Patent Specification No. 1,505,389 and comprises a fluid-pressure actuated diaphragm device operatively connected to a scoring tool so that the scoring tool can be moved towards and away from the glass to be scored by selectively controlling the fluid pressure acting on each side of the diaphragm. Such apparatus can achieve relatively rapid response times as described in that patent specification and is particularly useful for effecting interrupted scoring, i.e. scores which commence and/or terminate at a required position on the glass surface as distinct from being continuous, or extending to the edges of the ribbon or plate. Interrupted scores may, for example, be applied longitudinally of the ribbon or plate, i.e. parallel to its direction of travel, to leave small gaps in the longitudinal scores so that cross-scores, i.e. transverse to the direction of travel of the ribbon or plate, may be applied through those small gaps. It will be appreciated that accurate location of the commencement and termination of the interrupted scores is required and that a score should be complete between its commencement and termination.

It has been found that problems can arise from bouncing of the scoring tool as it comes into engagement with the glass. Such bouncing can result in unwanted local discontinuities (sometimes referred to as 'stitching') in the score just after its commencement and these local discontinuities can result in unacceptable corners and/or edges in the ultimate plates when the scores are broken out.

Another known form of glass scoring apparatus is described in the specification of U.K. Patent G.B. 2 002 343B and comprises a high loss factor damping device consisting of a hollow block of polyacrylate to prevent a substantial transient reduction of the cutting load. Such a cutter can be advantageous particularly for cross-scoring but is not well adapted to rapid interrupted longitudinal scoring.

According to the present invention there is provided glass scoring apparatus comprising a scoring tool, means for moving the scoring tool towards and away from flat glass to be scored, and an anti-bounce device comprising two resilient elements of different hardnesses arranged so that as the scoring tool moves towards the glass the softer of the two elements is first compressed to absorb energy and reduce the speed of movement of the scoring tool and then the harder of the two elements is compressed to further retard and then arrest movement of the scoring tool.

The softer of said two elements preferably has a hardness in the range of about 50 to 70 degrees on the International Rubber Hardness Degree (IRHD) scale and may for example be of high hysteresis butyl rubber. The harder of said two elements preferably has a hardness in the range of about 65 to 75 degrees on that hardness scale and may for example be of polyurethane. The difference in hardness between the two elements may typically be between about 5 and 15 degrees and is preferably between about 5 and 10 degrees on that scale. The actual hardness figures are of course subject to manufacturing tolerances. The two elements are preferably located between metal parts whose spacing decreases as the scoring tool moves towards the glass and may be attached to one of those metal parts with the softer element (when uncompressed) projecting further from it than the harder element. The elements may conveniently be in the form of annular rings preferably with the softer element surrounded by the harder element. The harder element preferably has a chamfered face so that there is a gradual increase in the extent of its engagement and the metal part to which the elements are attached preferably has a peripheral rim against which the harder element lies.

The means for moving the scoring tool towards and away from the glass preferably comprises a fluid-pressure actuated diaphragm device operatively connected to the scoring tool.

An embodiment of glass scoring apparatus in accordance with the invention will now be described, by way of example, with reference to the accompanying drawings in which:-

Figure 1 is a schematic representation of the apparatus,

Figure 2 is a cross-sectional view of part of the apparatus,

Figures 3, 4 and 5 schematically show parts of the apparatus in different positions,

Figure 6 is a diagrammatic graph illustrating deceleration without the new anti-bounce device, and

Figure 7 is a diagrammatic graph illustrating the effect of the device.

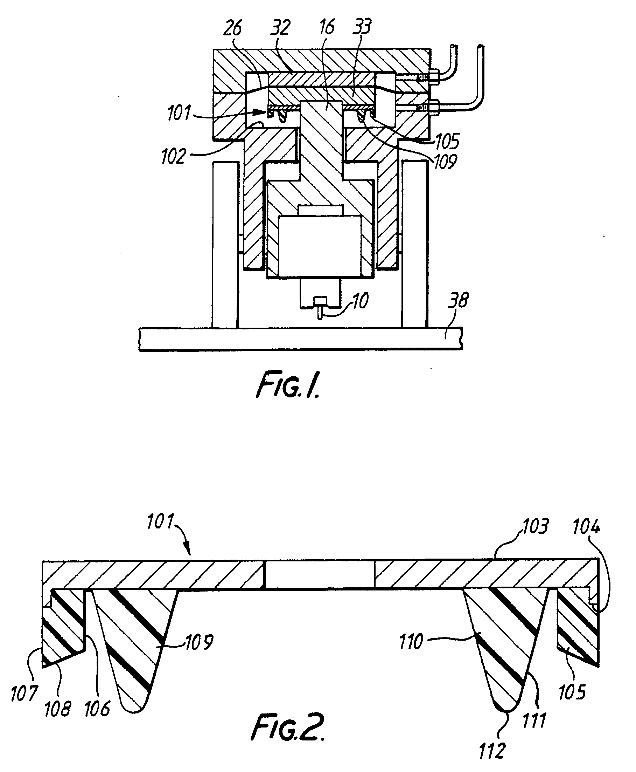

Figure 1 is basically similar to Figure 2 of United Kingdom Patent Specification 1,505,389 whose disclosure is incorporated herein by reference and to which reference can be made for a full description. For present purposes it is sufficient to indicate that the apparatus includes a scoring tool in the form of a wheel 10 operatively connected by a shaft 16 to a fluid-pressure actuated diaphragm 26 whose central part is embraced by metal blocks 32 and 33. In Figure 1 the scoring wheel 10 is shown clear of, i.e. spaced above, a flat glass ribbon or plate 38 to be scored. Actuation of the diaphragm 26 moves the scoring wheel 10 towards and into engagement with the upper glass surface to effect scoring and subsequently the wheel can be lifted from the glass at the end of the score by opposite actuation of the diaphragm.

In accordance with the present invention an anti-bounce device 101 is attached to the lower diaphragm block 33 so as to act between that block and a metal shoulder 102 forming part of the apparatus housing. The anti-bounce device 101 is shown in cross-sectional detail in Figure 2. It comprises a steel washer 103 having a peripheral rim 104. A first resilient element in the form of a ring 105 is bonded to the washer 103 so as to lie against the rim 104 which opposes outward movement of the ring 105 when it deforms under compression as described later. The ring 105 has vertical inner and outer faces 106 and 107 respectively and a chamfered lower face 108 for a purpose explained later. A second resilient element in the form of a ring 109 is bonded to the washer 103 inside the first ring 105, i.e. the ring 109 is of smaller diameter than and surrounded by the ring 105, and the inner ring 109 projects downwardly further from the washer 103 than the outer ring 105. The inner ring 109 has inclined inner and outer faces 110 and 111 respectively so that its width decreases outwardly from the washer 103 and it has a rounded lower face 112. The resilient annular rings 105 and 109 are of different hardnesses, the outer ring 105 being the harder and the inner ring 109 being the softer. Specifically the outer ring 105 is of polyurethane and the inner ring 109 is of high hysteresis butyl rubber.

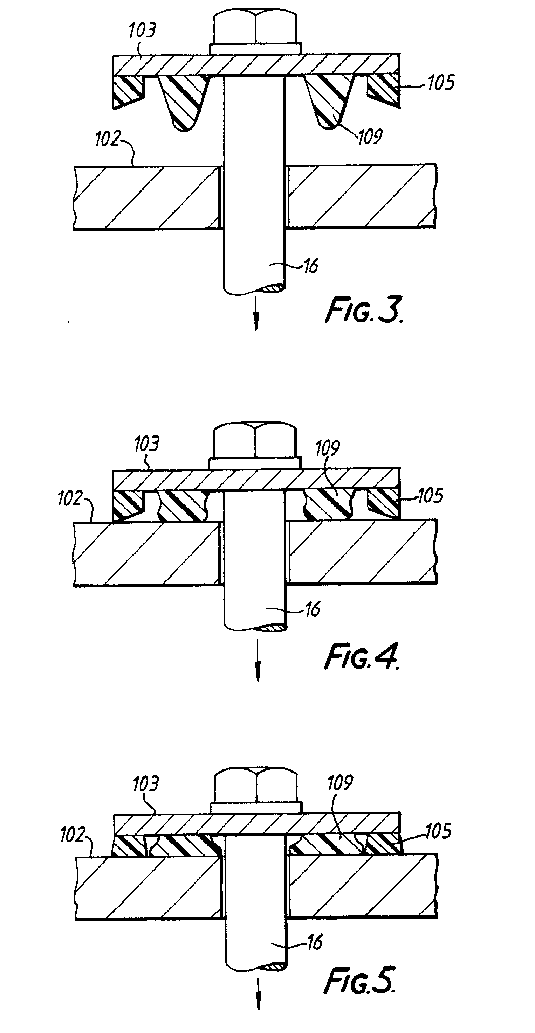

The action of the anti-bounce device 101 is schematically illustrated in Figures 3, 4 and 5. In these figures the metal washer 103 is for convenience simply shown bolted to the shaft 16 but it will be understood that in practice it is secured to the diaphragm block 33.

Figure 3 shows the device in its raised position (i.e. as in Figure 1) and the shaft 16 is just commencing to move downwardly through fluid-pressure actuation of the diaphragm to move the scoring wheel towards the glass. The washer 103 is therefore sufficiently spaced from the shoulder 102 for the annular rings 105 and 109 to be uncompressed.

As the washer 103 on the shaft 16 moves downwardly its spacing from the shoulder 102 decreases until the lower face 112 of the softer ring 109 engages the shoulder 102 and the softer ring 109 is then compressed between the washer and the shoulder. As this softer ring is being compressed it absorbs energy and reduces the speed of movement of the shaft 16 (and hence the scoring wheel 10) towards the glass.

Figure 4 shows the situation where the spacing between the washer 103 and the shoulder 102 is such that the harder ring 105 is just coming into engagement with the shoulder 102. Because of the chamfered lower face 108 of the harder ring 105 the extent of the engagement between this ring and the shoulder 102 increases gradually as the washer 103 and shaft 16 moves downwardly. The additional retardation given by compression of the harder ring 105 is therefore gradual rather than there being a sudden increase in retardation when the harder ring engages the shoulder 102.

As it is compressed the harder outer ring 105 deforms as shown in Figure 5 until it provides a 'solid' mechanical stop which prevents further decrease in the spacing between the washer 103 and the shoulder 102. Downward movement of the washer 103 and shaft 16 relative to the shoulder 102 is therefore arrested. Movement of the scoring wheel is therefore also arrested, the wheel now being in scoring position on the glass, and bouncing of the wheel off the glass is substantially reduced or eliminated through the action of the anti-bounce device.

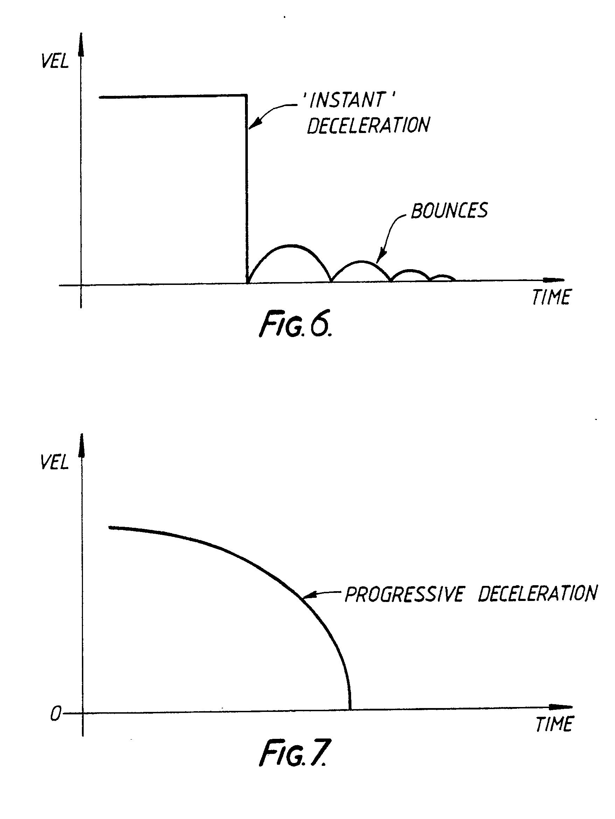

The anti-bounce effect can be appreciated from comparison of Figures 6 and 7 which are diagrammatic graphs of velocity against time in respect of movement of the scoring wheel towards the glass. Figure 6 illustrates the retardation which can occur with a direct metal to metal stop, e.g. if the anti-bounce device 101 is omitted from the glass scoring apparatus and the metal diaphragm block 33 is allowed to engage the metal shoulder 102 directly to arrest the downward movement of the scoring wheel. There is an 'instant' deceleration (indicated by the vertical part of the graph) to zero velocity when the two metal parts engage, and then a series of bounces of progressively decreasing amplitude with resultant 'stitching' of the scoreline. Figure 7 illustrates the retardation with the anti-bounce device 101 included. There is a progressive deceleration which is initially relatively gentle as the softer ring 109 alone is compressed and then progressively more rapid as the cross section of the ring increases until the harder ring 105 is compressed. It has been found that the combination of two rings of different hardnesses can provide a particularly advantageous progressive deceleration which is not achieved by use of either ring alone. The softer ring alone is generally unable to provide the necessary full resistance to movement to effect arrest and has been found liable to disintegrate in the attempt. The harder ring alone tends to produce too sudden a deceleration with resultant risk of bounce. Together a progressive deceleration and virtual freedom from bounce can be effected.

The rings 105 and 109 remain in compressed condition sandwiched between the washer 103 and the shoulder 102 as shown in Figure 5 while scoring is taking place and when the required score is completed the scoring wheel is withdrawn from the glass by actuation of the diaphragm. As the washer 103 moves away from the shoulder 102 the resilient rings 105 and 109 return to their uncompressed state shown in Figure 3 in readiness for commencement of the next score (which may in practice be very shortly after termination of the previous score).

The rings 105 and 109 are conveniently produced by moulding. The harder ring 105 preferably has a hardness in the range of about 65 to 75 degrees on the International Rubber Hardness Degree (IRHD) scale and ideally towards the lower end of that range. The softer ring 109 preferably has a hardness in the range of about 50 to 70 degrees on that scale (but lower than that of the harder ring) and ideally towards the centre of that range. The difference in hardness as between the two rings may typically be between about 5 and 15 degrees and is preferably between about 5 and 10 degrees of the IRHD scale. It will be appreciated that the hardness values are inherently in practice subject to manufacturing tolerances which may be about ±3 degrees on that hardness scale and that accurate hardness measurement can be difficult with thin sections. It will further be appreciated that, while polyurethane and butyl rubber are preferred materials for the harder and softer rings respectively, other suitable materials might be employed.

It will also be understood that, while a preferred embodiment is described above, other arrangements are possible. Notably, the two rings 105 and 109 need not necessarily be attached to the washer 103 but could alternatively be attached (so as to project upwardly) to the shoulder 102, or one could be attached to the shoulder and the other to the washer. The harder ring need not necessarily be outside the softer ring and the harder and softer elements need not actually be in the form of rings but could take some other shape. The means for moving the scoring tool towards and away from the glass could be other than a fluid-pressure actuated diaphragm.

It will also be appreciated that an anti-bounce device as described may be retro-fitted to an existing glass scoring apparatus or cutter of suitable form to improve the operation of that cutter.

**Claims**

1.  Glass scoring apparatus comprising a scoring tool (10) and means (16,26,32,33) for moving the scoring tool towards and away from flat glass (38) to be scored, characterised in that an anti-bounce device (101) is provided comprising two resilient elements (105,109) of different hardnesses arranged so that, as the scoring tool moves towards the glass, the softer (109) of the two elements is first compressed to absorb energy and reduce the speed of movement of the scoring tool and then the harder (105) of the two elements is compressed to further retard and then arrest movement of the scoring tool.

2.  Glass scoring apparatus according to claim 1 characterised in that the softer (109) of the two elements (105,109) has a hardness in the range of about 50 to 70 degrees on the IRHD scale.

3.  Glass scoring apparatus according to claim 1 or 2 characterised in that the softer (109) of the two elements (105,109) is of high hysteresis butyl rubber.

4.  Glass scoring apparatus according to any one of the preceding claims characterised in that the harder (105) of the two elements (105,109) has a hardness in the range of about 65 to 75 degrees on the IRHD scale.

5.  Glass scoring apparatus according to any one of the preceding claims characterised in that the harder (105) of the two elements (105,109) is of polyurethane.

6.  Glass scoring apparatus according to any one of the preceding claims characterised in that the difference in hardness between the two elements (105,109) is between about 5 and 15 degrees on the IRHD scale.

7.  Glass scoring apparatus according to claim 6 characterised in that the difference in hardness is between about 5 and 10 degrees on the IRHD scale.

8.  Glass scoring apparatus according to any one of the preceding claims characterised in that the two elements (105, 109) are located between metal parts (103, 102) whose spacing decreases as the scoring tool (10) moves towards the glass (38).

9.  Glass scoring apparatus according to claim 8 characterised in that the two elements (105, 109) are attached to one of the metal parts (103), with the softer element (109) (when uncompressed) projecting further from it than the harder element (105).

10. Glass scoring apparatus according to claim 8 or 9 characterised in that the two elements (105, 109) are in the form of annular rings.

11. Glass scoring apparatus according to claim 10 characterised in that the softer element (109) is surrounded by the harder element (105).

12. Glass scoring apparatus according to claim 10 or 11 characterised in that the harder element (105) has a chamfered face (108).

13. Glass scoring apparatus according to claim 11 or 12 characterised in that the metal part (103) to which the elements (105, 109) are attached has a peripheral rim (104) against which the harder element (105) lies.

## Revendications

1. Appareil de taille de verre comprenant un outil de taille (10) et un moyen (16, 26, 32, 33) pour rapprocher et éloigner l'outil de taille du verre plat (38) à tailler, caractérisé en ce qu'un dispositif anti-rebond (101) est proposé, comprenant deux éléments élastiques (105, 109) de dureté différente disposés de manière que, lorsque l'outil de taille se rapproche du verre, l'élément (109) le moins dur soit d'abord comprimé pour absorber l'énergie et diminuer la vitesse de déplacement de l'outil de taille puis que l'élément (105) le plus dur soit comprimé pour ralentir encore puis arrêter le déplacement de l'outil de taille.

2. Appareil de taille de verre selon la revendication 1 caractérisé en ce que l'élément (109) le moins dur parmi les deux éléments (105, 109) est d'une dureté dans la plage de 50 à 70 degrés environ sur l'échelle internationale de dureté du caoutchouc.

3. Appareil de taille de verre selon la revendication 1 ou 2 caractérisé en ce que l'élément (109) le moins dur parmi les deux éléments (105, 109) est en caoutchouc de butyle d'hystérèse élevée.

4. Appareil de taille de verre selon l'une quelconque des revendications précédentes caractérisé en ce que l'élément (105) le plus dur parmi les deux éléments (105, 109) est d'une dureté dans la plage de 65 à 75 degrés environ sur l'échelle internationale de dureté du caoutchouc.

5. Appareil de taille de verre selon l'une quelconque des revendications précédentes caractérisé en ce que l'élément (105) le plus dur parmi les deux éléments (105, 109) est en polyuréthanne.

6. Appareil de taille de verre selon l'une quelconque des revendications précédentes caractérisé en ce que la différence de dureté entre les deux éléments (105, 109) est comprise entre 5 et 15 degrés environ sur l'échelle internationale de dureté du caoutchouc.

7. Appareil de taille de verre selon la revendication 6 caractérisé en ce que la différence de dureté est comprise entre 5 et 10 degrés environ sur l'échelle internationale de dureté du caoutchouc.

8. Appareil de taille de verre selon l'une quelconque des revendications précédentes caractérisé en ce que les deux éléments (105, 109) sont disposés entre des pièces métalliques (103, 102) dont l'espacement se réduit au fur et à mesure que l'outil de taille (70) se rapproche du verre (38).

9. Appareil de taille de verre selon la revendication 8 caractérisé en ce que les deux éléments (105, 109) sont fixés à une des pièces métalliques (103), l'élément (109) le moins dur (lorsqu'il n'est pas comprimé) étant davantage en projection que l'élément (105) le plus dur.

10. Appareil de taille de verre selon la revendication 8 ou 9 caractérisé en ce que les deux éléments (105, 109) ont la forme de bagues annulaires.

11. Appareil de taille de verre selon la revendication 10 caractérisé en ce que l'élément (109) le moins dur est entouré par l'élément (105) le plus dur.

12. Appareil de taille de verre selon la revendication 10 ou 11 caractérisé en ce que l'élément (105) le plus dur comprend une face chanfreinée (108).

13. Appareil de taille de verre selon la revendication 11 ou 12 caractérisé en ce que la pièce métallique (103) à laquelle les éléments (105, 109) sont fixés comporte une bordure périphérique (104) contre laquelle l'élément (105) le plus dur repose.

## Ansprüche

1. Vorrichtung zum Ritzen von Glas mit einem Ritzwerkzeug (10) und Mitteln (16, 26, 32, 33) zur Bewegung des Ritzwerkzeugs in Richtung eines zu ritzenden Flachglases (38) und von diesem weg, dadurch gekennzeichnet, daß eine Aufprallschutzvorrichtung (101) vorgesehen ist mit zwei elastischen Elementen (105, 109) unterschiedlicher Härte, die so angeordnet sind, daß bei einer Bewegung des Ritzwerkzeugs in Richtung des Glases das weichere (109) der zwei Elemente zuerst zusammengedrückt wird, um Energie aufzunehmen und die Geschwindigkeit der Bewegung des Ritzwerkzeugs zu verringern, und daß dann das härtere (105) der zwei Elemente zusammengedrückt wird, um die Bewegung des Ritzwerkzeugs weiter zu verzögern und schließlich zum Stillstand zu bringen.

2. Vorrichtung zum Ritzen von Glas nach Anspruch 1, dadurch gekennzeichnet, daß das weichere (109) der zwei Elemente (105, 109) eine Härte im Bereich von etwa 50 bis 70 Grad auf der IRHD-Skala aufweist.

3. Vorrichtung zum Ritzen von Glas nach Anspruch 1 oder 2, dadurch gekennzeichnet, daß das weichere (109) der zwei Elemente (105, 109) aus Butylkautschuk mit einer hohen Hysterese besteht.

4. Vorrichtung zum Ritzen von Glas nach einem der vorhergehenden Ansprüche, dadurch gekennzeichnet, daß das härtere (105) der zwei Elemente (105, 109) eine Härte im Bereich von etwa 65 bis 75 Grad auf der IRHD-Skala aufweist.

5. Vorrichtung zum Ritzen von Glas nach einem der vorhergehenden Ansprüche, dadurch gekennzeichnet, daß das härtere (105) der zwei Elemente (105, 109) aus Polyurethan besteht.

6. Vorrichtung zum Ritzen von Glas nach einem der vorhergehenden Ansprüche, dadurch gekennzeichnet, daß der Härteunterschied zwischen den zwei Elementen (105, 109) zwischen etwa 5 und 15 Grad auf der IRHD-Skala ist.

7. Vorrichtung zum Ritzen von Glas nach Anspruch 6, dadurch gekennzeichnet, daß der Härteunterschied zwischen etwa 5 und 10 Grad auf der IRHD-Skala ist.

8. Vorrichtung zum Ritzen von Glas nach einem der vorhergehenden Ansprüche, dadurch gekennzeichnet, daß die zwei Elemente (105, 109) zwischen Metallteilen (103, 102) angeordnet sind, deren Abstand abnimmt, wenn sich das Ritzwerkzeug (10) in Richtung des Glases (38) bewegt.

9. Vorrichtung zum Ritzen von Glas nach Anspruch 8, dadurch gekennzeichnet, daß die zwei Elemente (105, 109) an einem der Metallteile (103) angeordnet sind, wobei das weichere Element (109) (im nicht zusammengedrückten Zustand) weiter von diesem vorsteht als das härtere Element (105).

10. Vorrichtung zum Ritzen von Glas nach Anspruch 8 oder 9, dadurch gekennzeichnet, daß die zwei Elemente (105, 109) die Form von kreisförmigen Ringen aufweisen.

11. Vorrichtung zum Ritzen von Glas nach Anspruch 10, dadurch gekennzeichnet, daß das weichere Element (109) von dem härteren Element (105) umgeben ist.

12. Vorrichtung zum Ritzen von Glas von Anspruch 10 oder 11, dadurch gekennzeichnet, daß das härtere Element (105) eine abgeschrägte Fläche (108) aufweist.

13. Vorrichtung zum Ritzen von Glas nach Anspruch 11 oder 12, dadurch gekennzeichnet, daß das Metallteil (103), an dem die Elemente (105, 109) angeordnet sind, einen Umfangsrand (104) aufweist, an dem das härtere Element (105) anliegt.

FIG. 1.

FIG. 2.

FIG.3.

FIG.4.

FIG.5.

'INSTANT'
DECELERATION

BOUNCES

VEL

TIME

FIG. 6.

VEL

PROGRESSIVE DECELERATION

0

TIME

FIG. 7.